# FASCICULE DE BREVET EUROPEEN

(11) **EP 2 805 370 B1**
(45) Date de publication et mention de la délivrance du brevet: **18.11.2015**
(21) Numéro de dépôt: 13700399.2
(22) Date de dépôt: 17.01.2013
(51) Int. Cl.: H01M 8/06, H01M 8/04, B01D 53/26, B60T 17/00

(54) **SYSTÈME D'ALIMENTATION D'UNE PILE À COMBUSTIBLE EN GAZ**
SYSTEM ZUR VERSORGUNG EINER BRENNSTOFFZELLE MIT GAS
SYSTEM FOR SUPPLYING A FUEL CELL WITH GAS

(30) Priorité: 17.01.2012 FR 1250450
(43) Date de publication de la demande: 26.11.2014
(73) Titulaire: Areva Stockage d'Energie, 13547 Aix-en-Provence (FR)
(72) Inventeur: SWICA, Jérémy, F-13270 Fos Sur Mer (FR); KONIECZNY, Anaïs, F-54000 Nancy (FR)
(74) Mandataire: Blot, Philippe Robert Emile
(86) Numéro de dépôt international: PCT/EP2013/050812
(87) Numéro de publication internationale: WO 2013/107803

(56) Documents cités:
- DE-A1-102007 058 868
- US-A1- 2002 051 898
- US-A1- 2004 028 966
- US-B1- 7 410 714

## Description

La présente invention concerne un système d'alimentation d'une pile à combustible en gaz oxydant ou réducteur, du type comprenant :
- une source de gaz,
- un dispositif de séchage à régénération, propre à sécher un gaz passant au travers du dispositif de séchage ou à être régénéré en humidifiant un gaz passant au travers du dispositif de séchage,
- une sortie d'alimentation de la pile à combustible, et
- un circuit fluidique, le circuit fluidique raccordant la source de gaz au dispositif de séchage pour le séchage du gaz fourni par la source de gaz et l'obtention d'un gaz sec, le circuit fluidique permettant la recirculation d'au moins une partie du gaz sec au travers du dispositif de séchage pour la régénération du dispositif de séchage et l'humidification du gaz sec recirculé.

Il est connu de sécher un gaz généré par une source préalablement à son utilisation dans un dispositif quelconque, au moyen d'un sécheur utilisant un desséchant. Il est également connu d'utiliser une partie du gaz sec obtenu pour régénérer le desséchant.

EP-A-0 530 019 décrit ainsi un dispositif de séchage d'air pour sécher un air fourni par un compresseur préalablement à son stockage dans un réservoir sous pression. Le dispositif de séchage d'air décrit est notamment adapté pour fonctionner dans un mode régénération dans lequel une partie de l'air stocké dans le réservoir est recirculé à travers le dispositif de séchage pour régénérer un desséchant du dispositif de séchage.

Cependant, ce dispositif de séchage ne donne pas entière satisfaction. En effet, cette méthode de régénération occasionne une perte importante de gaz sec.

Il est par ailleurs connu de US 2002/0051898 A1 et de DE 102007058868 A1 des dispositifs de séchage de dihydrogène adaptés pour fonctionner dans un mode régénération dans lequel du dihydrogène sec stocké dans un réservoir est passé au travers de ces dispositif de séchage pour régénérer un desséchant des dispositifs de séchage, le dihydrogène humidifié résultant de la régénération du desséchant étant ensuite utilisé pour alimenter une pile à combustible.

Un objectif de l'invention est de proposer un système d'alimentation d'une pile à combustible adapté pour minimiser les pertes de gaz. D'autres objectifs sont de pouvoir stocker le gaz dans un réservoir avant son utilisation dans la pile à combustible, en limitant les phénomènes de corrosion à l'intérieur du réservoir, et de pouvoir maîtriser le taux d'humidité et/ou la température du gaz en sortie du système d'alimentation.

A cet effet, l'invention a pour objet un système d'alimentation du type précité, dans lequel le circuit fluidique raccorde la sortie d'alimentation au dispositif de séchage, pour l'alimentation de la sortie d'alimentation avec du gaz humidifié obtenu par la recirculation du gaz sec au travers du dispositif de séchage pour la régénération du dispositif de séchage, et dans lequel le circuit fluidique comprend une ligne de contournement du dispositif de séchage, pour l'alimentation de la sortie d'alimentation en gaz sec issu du dispositif de séchage sans recirculation au travers du dispositif de séchage.

Selon des modes de réalisation préférés de l'invention, le système d'alimentation comprend l'une ou plusieurs des caractéristiques suivantes, prises isolément ou suivant toute(s) combinaison(s) technique(s) possible(s) :
- ledit système d'alimentation comprend en outre un réservoir, pour stocker du gaz sec séché par le dispositif de séchage, et le circuit fluidique est adapté à alimenter le dispositif de séchage avec au moins une partie du gaz sec stocké dans le réservoir, pour la régénération du dispositif de séchage ;
- le circuit fluidique comprend une ligne d'alimentation du réservoir en gaz sec issu du dispositif de séchage, et d'évacuation du gaz sec hors du réservoir pour la régénération du dispositif de séchage ;
- ledit système d'alimentation comprend des moyens d'ajustement de la proportion de gaz sec recirculé au travers du dispositif de séchage et de gaz sec non recirculé ;
- la source de gaz est un électrolyseur ; et
- le dispositif de séchage est un dispositif à adsorption par variation de température et/ou par variation de pression.

L'invention a également pour objet un procédé d'alimentation d'une pile à combustible en gaz oxydant ou réducteur, comprenant les étapes suivantes :
- fourniture d'un gaz ;
- séchage du gaz par passage dans un dispositif de séchage de gaz à régénération, de façon à obtenir un gaz sec,
- humidification d'au moins une partie du gaz sec en régénérant le dispositif de séchage par recirculation de la au moins une partie du gaz sec dans le dispositif de séchage, de manière à obtenir un gaz humidifié,
- et alimentation de la pile à combustible avec du gaz séché dans le dispositif de séchage puis humidifié par recirculation dans le dispositif de séchage, caractérisé en ce qu'au moins une partie du gaz sec alimente directement la pile à combustible sans être préalablement humidifié par recirculation dans le dispositif de séchage.

Selon des modes de réalisation préférés de l'invention, le procédé comprend l'une ou plusieurs des caractéristiques suivantes, prises isolément ou suivant toute(s) combinaison(s) technique(s) possible(s) :
- ledit procédé d'alimentation comprend en outre une étape de stockage du gaz sec, préalable à l'étape d'humidification ; et
- le procédé comprend une étape supplémentaire d'ajustement de la proportion de gaz sec humidifié par recirculation dans le dispositif de séchage.

D'autres caractéristiques et avantages de l'invention apparaîtront à la lecture de la description qui va suivre, donnée uniquement à titre d'exemple et faite en se référant aux dessins annexés, sur lesquels :
- la Figure 1 est une vue schématique d'un système de pile à combustible comprenant un système d'alimentation selon l'invention,
- la Figure 2 est une vue schématique en coupe d'une cellule de pile à combustible du système de la Figure 1,
- la Figure 3 est un schéma du système d'alimentation du système de pile à combustible de la Figure 1, selon un premier mode de réalisation,
- la Figure 4 est un schéma du système d'alimentation du système de pile à combustible de la Figure 1, selon un deuxième mode de réalisation, et
- la Figure 5 est un schéma du système d'alimentation du système de pile à combustible de la Figure 1, selon un troisième mode de réalisation.

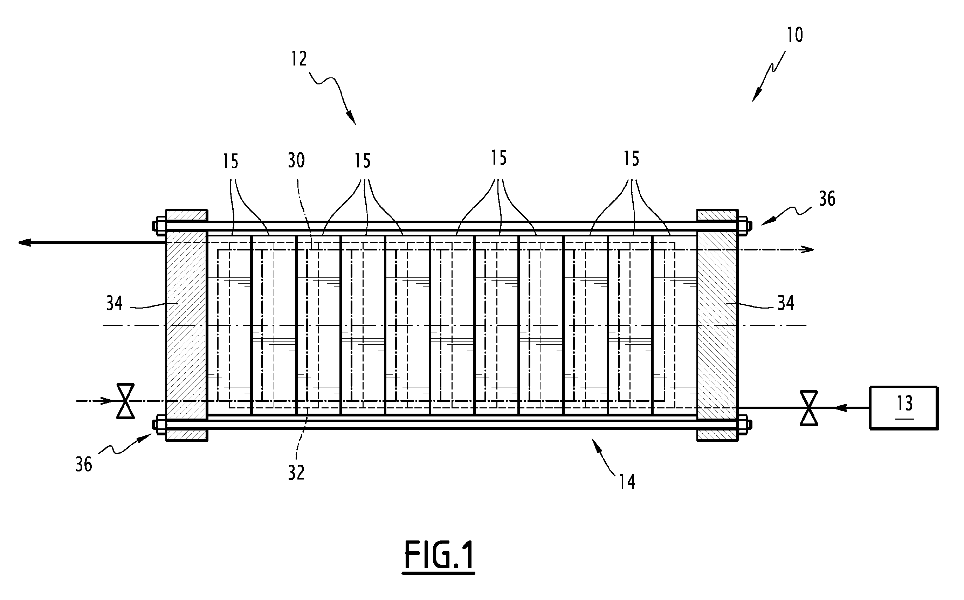

Le système de pile à combustible 10, représenté sur la Figure 1, comprend une pile à combustible 12, pour produire un courant électrique par une réaction d'oxydoréduction entre un gaz oxydant et un gaz réducteur, et un système 13 d'alimentation de la pile à combustible 12 en gaz oxydant.

La pile à combustible 12 est constituée par un empilement 14 de cellules de pile à combustible 15. En variante (non représentée), la pile à combustible 12 comprend plusieurs empilements 14 raccordés fluidiquement en parallèle les uns aux autres.

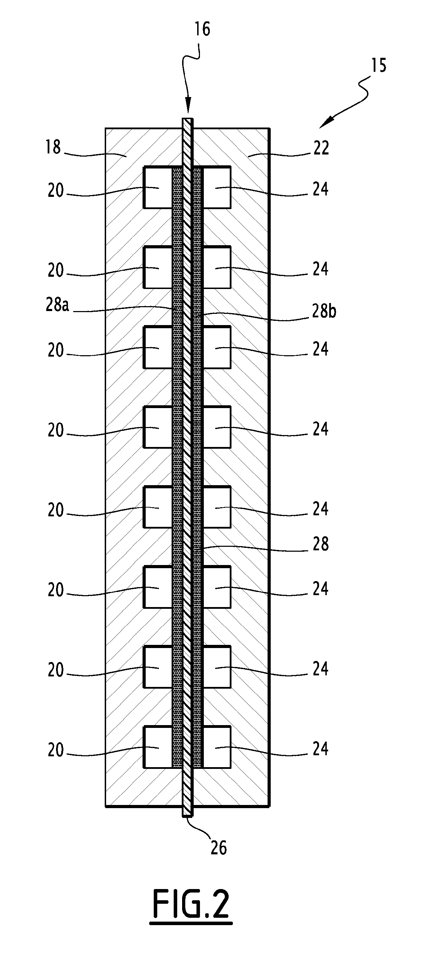

Une cellule 15 de l'empilement 14 est représentée sur la Figure 2. Elle comprend un assemblage membrane-électrode 16 intercalé entre une plaque anodique 18 et une plaque cathodique 22.

L'assemblage membrane-électrode 16 comprend une membrane 26 d'échange d'ions prise en sandwich entre une anode 28a et une cathode 28b.

La membrane 26 isole électriquement l'anode 28a de la cathode 28b.

La membrane 26 est adaptée pour ne laisser que des ions chargés, de préférence des cations, la traverser. La membrane 26 est généralement une membrane d'échange de protons, adaptée pour ne laisser que des protons la traverser. La membrane 26 est typiquement en matériau polymère.

L'anode 28a et la cathode 28b comprennent chacune un catalyseur, typiquement du platine ou un alliage de platine, pour faciliter la réaction.

La plaque anodique 18 délimite un conduit anodique 20 pour la circulation du gaz réducteur le long de l'anode 28a et en contact avec celle-ci. Pour ce faire, la plaque 18 est munie d'au moins un canal ménagé dans la face de la plaque tournée vers l'assemblage membrane-électrode 16 et refermé par ledit assemblage membrane électrode 16. La plaque anodique 18 est formée d'un matériau conducteur électriquement, typiquement du graphite. Le gaz réducteur utilisé est un gaz comprenant du dihydrogène, comme par exemple du dihydrogène pur.

La plaque cathodique 22 délimite un conduit cathodique 24 pour la circulation du gaz oxydant le long de la cathode 28b et en contact avec celle-ci. Pour ce faire, la plaque 22 est munie d'au moins un canal ménagé dans la face de la plaque tournée vers l'assemblage membrane-électrode 16 et refermé par ledit assemblage membrane électrode 16. La plaque cathodique 22 est formée d'un matériau conducteur électriquement, typiquement du graphite. Le gaz oxydant utilisé est un gaz comprenant du dioxygène, comme par exemple du dioxygène pur ou un mélange d'air et de dioxygène.

La membrane 26 sépare les gaz oxydant et réducteur. Elle est disposée entre la plaque anodique 18 et la plaque cathodique 22 de la cellule 15 et isole celles-ci électriquement l'une de l'autre.

L'anode 28a est en contact électrique avec la plaque anodique 18. La cathode 28b et est en contact électrique avec la plaque cathodique 22. C'est au niveau de l'anode 28a qu'a lieu l'oxydation du gaz réducteur et que les électrons et les protons sont générés. Les électrons transitent ensuite via la plaque anodique 18 vers la cathode 28b de la cellule 15, ou vers la cathode d'une autre cellule, pour participer à la réduction du gaz oxydant.

Dans l'empilement 14, la plaque anodique 18 de chaque cellule est en contact avec la plaque cathodique 22 de la cellule voisine. Les plaques anodique et cathodique 18, 22 assurent ainsi le transfert des électrons du gaz réducteur circulant dans une cellule vers le gaz oxydant circulant dans une autre cellule. Les plaques anodique 18 et cathodique 22 de deux cellules voisines de l'empilement 18 sont de préférence venues de matière et forment ensemble une plaque bipolaire.

De retour à la Figure 1, les conduits anodiques 20 des cellules 15 sont raccordés fluidiquement les uns aux autres et forment ensemble un compartiment anodique 30 de l'empilement 14, et les conduits cathodiques 22 des cellules 15 sont raccordés fluidiquement les uns aux autres et forment ensemble un compartiment cathodique 32 de l'empilement 14. Sur la Figure 1, le compartiment anodique 30 est représenté schématiquement en traits mixtes et le compartiment cathodique 32 est représenté schématiquement en traits pointillés.

Les cellules 15 sont maintenues empilées grâce à des plaques de serrage 34 disposées aux extrémités de l'empilement 14. Des boulons de serrage 36 exercent une force de serrage sur les plaques 34 pour les maintenir en compression contre les cellules 15.

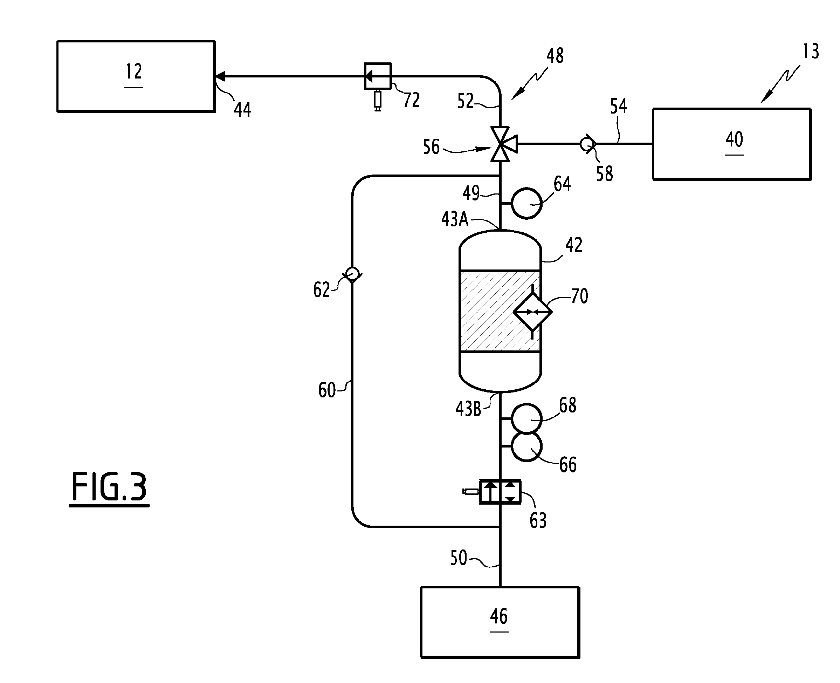

Le système d'alimentation 13 est adapté pour alimenter le compartiment cathodique 32 en gaz oxydant. Il est présenté en détails sur les Figures 3, 4 et 5.

Comme représenté sur les Figures 3, 4 et 5, le système d'alimentation 13 comprend une source 40 de gaz oxydant, un dispositif 42 de séchage du gaz oxydant produit par la source 40, une sortie 44 d'alimentation de la pile à combustible 12 en gaz oxydant, un réservoir 46 de stockage du gaz oxydant, et un circuit fluidique 48 de circulation du gaz oxydant.

La source 40 est adaptée pour produire un gaz humide. La source 40 est typiquement un électrolyseur, adapté pour produire du dioxygène par électrolyse.

Le dispositif de séchage 42 est propre à sécher le gaz oxydant produit par la source 40 et passant au travers du dispositif de séchage 42. Il est également propre à être régénéré par passage d'un gaz sec au travers du dispositif de séchage 42. A cet effet, le dispositif de séchage 42 comprend un desséchant (non représenté) adapté pour retenir des molécules d'eau d'un gaz humide et à relarguer des molécules d'eau dans un gaz sec.

Le dispositif de séchage 42 comprend un premier orifice 43A d'entrée ou de sortie de gaz humide et un deuxième orifice 43B d'entrée ou de sortie de gaz sec.

La sortie d'alimentation 44 est raccordée fluidiquement au compartiment cathodique 32 de la pile à combustible 12.

Le réservoir 46 est adapté pour stocker le gaz sec, de préférence à haute pression.

Le circuit fluidique 48 est adapté pour sélectivement alimenter le réservoir 46 en gaz sec à partir de la source 40 au travers du dispositif de séchage 42, et alimenter la pile à combustible 12 à partir du réservoir 46.

Le circuit d'alimentation 48 comprend une ligne de stockage 49 raccordée au premier orifice 43A du dispositif de séchage, une ligne de sortie 52 raccordée à la sortie d'alimentation 44 et une ligne d'entrée 54 raccordée à la source 40.

Le circuit fluidique 48 comprend des moyens de distribution 56 pour raccorder fluidiquement le dispositif de séchage 42 sélectivement à la source 40 ou à la sortie d'alimentation 44. Dans l'exemple illustré, les moyens de distribution comprennent une vanne trois voies comprenant un port relié à la ligne de stockage 49, un port relié à la ligne d'entrée 54, et un port relié à la ligne de sortie 52. Les moyens de distribution 56 sont adaptés pour mettre en communication fluidique la ligne de stockage 49 avec sélectivement la ligne de sortie 52 ou la ligne d'entrée 54.

Le circuit fluidique 48 comprend une ligne 50 d'alimentation du réservoir 46 en gaz sec issu du dispositif de séchage 42, et d'évacuation du gaz sec hors du réservoir 46 pour la régénération du dispositif de séchage 42. La ligne d'alimentation et d'évacuation 50 relie fluidiquement le réservoir 46 au deuxième orifice 43B du dispositif de séchage 42.

Dans l'exemple représenté, la ligne d'entrée 54 comprend un dispositif anti-retour 58, pour empêcher le gaz produit de refluer vers la source 40.

Enfin, le circuit fluidique 48 comprend une ligne 60 de contournement du dispositif de séchage 42, pour qu'au moins une partie du gaz sec alimente la pile à combustible 12 sans être recirculé au travers du dispositif de séchage 42. La ligne de contournement 60 est raccordée fluidiquement à la ligne d'alimentation et d'évacuation 50 et à la ligne de stockage 49, en dérivation du dispositif de séchage 42. Elle comprend un dispositif anti-retour 62, pour empêcher le gaz humide produit par la source 40 de contourner le dispositif de séchage 42.

Le système d'alimentation 13 comprend également des moyens d'ajustement de la proportion de gaz sec recirculé au travers du dispositif de séchage 42 et de gaz sec non recirculé et alimentant directement la pile à combustible 12 en transitant par la ligne de contournement 60. Ces moyens d'ajustement comprennent dans l'exemple illustré une vanne 63 disposée sur la ligne d'alimentation 50, ici entre la ligne de contournement 60 et le dispositif de séchage 42.

En variante, la vanne 63 est disposée sur la ligne de contournement 60.

Le système d'alimentation 13 comprend en outre deux capteurs de température 64, 66, pour mesurer la température du gaz en entrée et en sortie du dispositif de séchage 42, et un capteur de pression 68, pour évaluer la pression de gaz à l'intérieur du dispositif de séchage 42.

Dans l'exemple représenté sur la Figure 3, le dispositif de séchage 42 est de type à adsorption par variation de température (mieux connu sous l'acronyme anglais de TSA pour « Temperature Swing Adsorption »).

Dans cet exemple, le dispositif de séchage 42 est adapté pour que le gaz traversant le dispositif de séchage 42 soit plus chaud en phase de régénération du dispositif de séchage 42 qu'en phase de séchage du gaz, de façon à accélérer la désorption de l'eau hors du desséchant. A cet effet, le dispositif de séchage 42 comprend un réchauffeur 70 destiné, lorsqu'il est activé, à chauffer le gaz traversant le dispositif de séchage 42. De préférence, un module de commande (non représenté) est adapté pour commander le réchauffeur 70 en fonction des températures mesurées par les capteurs 64,66.

La ligne de sortie 52 comprend en outre un régulateur de pression 72, pour réduire la pression de gaz au niveau de la sortie d'alimentation 44 par rapport à la pression de gaz dans le dispositif de séchage 42. Ainsi, la pression d'alimentation de la pile à combustible 12 est maîtrisée.

Le procédé de fonctionnement du système d'alimentation 13 va maintenant être décrit, en regard de la Figure 3.

Dans une première phase de séchage du gaz produit par la source 40, la source 40 est active et les moyens de distribution 56 sont configurés pour mettre en communication fluidique la source 40 avec le dispositif de séchage 42.

Le gaz produit passe au travers du dispositif de séchage 42, où l'eau contenue dans le gaz est retenue par le desséchant. Puis le gaz sec obtenu en sortie du dispositif de séchage 42 est stocké dans le réservoir 46.

La pression du gaz stocké est contrôlée au moyen du capteur 68.

Dans une deuxième phase de régénération du dispositif de séchage 42, la source 40 est inactive et les moyens de distribution 56 sont configurés pour mettre en communication fluidique le dispositif de séchage 42 avec la sortie d'alimentation 44.

Du gaz sec stocké dans le réservoir 46 est recirculé dans le dispositif de séchage 42, où le gaz est chauffé par le réchauffeur 70. Ce gaz sec recirculé est humidifié par l'eau retenue dans le desséchant et entraîne une partie de cette eau hors du dispositif de séchage 42. Dans le même temps, du gaz sec stocké dans le réservoir 46 contourne le dispositif de séchage 42 par la ligne de contournement 60. Il est mélangé au gaz recirculé dans la ligne stockage 49. Puis le mélange de gaz recirculé et de gaz non-recirculé est détendu au travers du régulateur de pression 72, avant d'alimenter la pile 12.

Un capteur d'humidité (non représenté) mesure l'humidité dans le mélange de gaz et la vanne 63 est commandée en fonction du taux d'humidité mesuré, de façon à ajuster la proportion de gaz sec recirculé.

Un capteur de température (non représenté) mesure la température du mélange de gaz, et la vanne 63 est commandée en fonction de la température mesurée, de façon à ajuster la température du mélange de gaz.

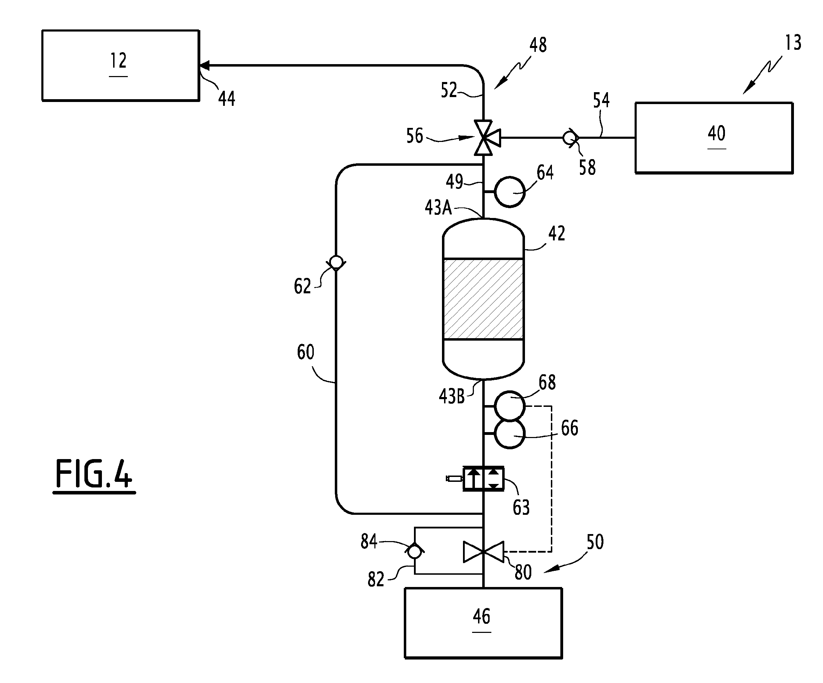

Dans l'exemple représenté sur la Figure 4, le dispositif de séchage 42 est de type à adsorption par variation de pression (mieux connu sous l'acronyme anglais de PSA pour « Pressure Swing Adsorption »).

Dans cet exemple, le système d'alimentation 13 est adapté pour que la pression du gaz traversant le dispositif de séchage 42 soit plus faible en phase de régénération qu'en phase de séchage, de façon à accélérer la désorption de l'eau hors du desséchant. A cet effet, la ligne d'alimentation et d'évacuation 50 comprend un régulateur de pression 80, pour réduire la pression au niveau du dispositif de séchage 42 par rapport à la pression dans le réservoir 46 pour un gaz venant du réservoir 46. Ce régulateur de pression 80 est adapté pour être commandé par un module (non représenté) en fonction de la pression mesurée par le capteur 68.

Le système d'alimentation 13 comprend en outre une ligne 82 de contournement du régulateur de pression 80, pour que le gaz sec issu du dispositif de séchage 42 alimente le réservoir 46. La ligne de contournement 82 comprend un dispositif anti-retour 84, pour empêcher du gaz sortant du réservoir 46 de contourner le régulateur 80.

Le procédé de production du système d'alimentation 13 va maintenant être décrit, en regard de la Figure 4.

Dans la phase de séchage du gaz produit par la source 40, la source 40 est active et les moyens de distribution 56 sont configurés pour mettre en communication fluidique la source 40 avec le dispositif de séchage 42.

Le gaz produit passe au travers du dispositif de séchage 42, où l'eau contenue dans le gaz est retenue par le desséchant. Puis le gaz sec obtenu en sortie du dispositif de séchage 42 contourne le régulateur de pression 80 par la ligne de contournement 82, avant d'être stocké dans le réservoir 46.

La pression du gaz stocké est contrôlée au moyen du capteur 68.

Dans la phase de régénération du dispositif de séchage 42, la source 40 est inactive et les moyens de distribution 56 sont configurés pour mettre en communication fluidique le dispositif de séchage 42 avec la sortie d'alimentation 44.

Le gaz sec sortant du réservoir 46 est détendu au travers du régulateur de pression 80. Puis du gaz sec est recirculé à travers le dispositif de séchage 42, où il est humidifié par l'eau retenue dans le desséchant et entraîne une partie de cette eau hors du dispositif de séchage 42. Dans le même temps, du gaz sec détendu au travers du régulateur de pression 80 contourne le dispositif de séchage 42 par la ligne de contournement 60. Il est mélangé au gaz recirculé dans la ligne stockage 49 et ce mélange alimente la pile à combustible 12.

Un capteur d'humidité (non représenté) mesure l'humidité dans le mélange de gaz et la vanne 63 est commandée en fonction du taux d'humidité mesuré, de façon à ajuster la proportion de gaz sec recirculé.

Un capteur de température (non représenté) mesure la température du mélange de gaz, et la vanne 63 est commandée en fonction de la température mesurée, de façon à ajuster la température du mélange de gaz.

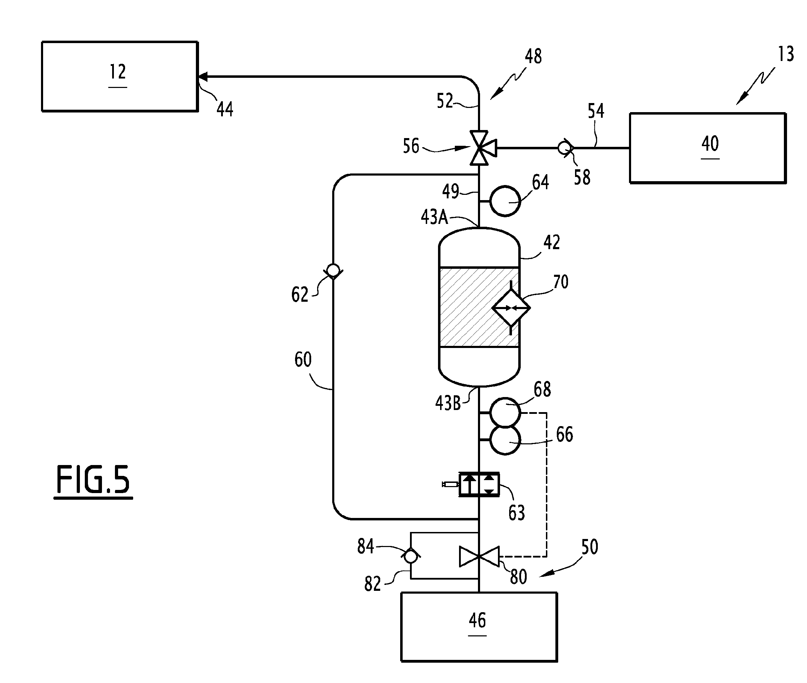

Dans l'exemple représenté sur la Figure 5, le dispositif de séchage 42 est de type à adsorption par variation de pression et de température. Le système d'alimentation 13 cumule alors les caractéristiques des modes de réalisation des Figures 3 et 4, à savoir :
- il est adapté pour que la pression du gaz traversant le dispositif de séchage 42 soit plus faible en phase de régénération qu'en phase de séchage, et à cet effet la ligne d'alimentation et d'évacuation 50 comprend le régulateur de pression 80, et
- le dispositif de séchage 42 est adapté pour que le gaz traversant le dispositif de séchage 42 soit plus chaud en phase de régénération du dispositif de séchage 42 qu'en phase de séchage du gaz, et comprend à cet effet le réchauffeur 70.

Ce mode de réalisation permet d'accélérer la désorption de l'eau hors du desséchant en phase de régénération par rapport à un disposition d'adsorption qui serait simplement par variation de pression ou de température.

Grâce à l'invention, les pertes de gaz sont minimisées. En effet, le gaz ayant servi à la régénération du dispositif de séchage est recyclé en étant utilisé comme gaz d'alimentation de la pile à combustible.

En outre, il est possible de maîtriser le taux d'humidité et la température du gaz alimentant la pile à combustible, en ajustant en fonction des besoins la proportion de gaz sec recirculé et la proportion de gaz sec non recirculé.

De plus, le système d'alimentation permet de séparer la phase de production de gaz oxydant de la phase de production d'électricité par consommation du gaz oxydant.

Enfin, le système d'alimentation présente un encombrement particulièrement réduit.

On notera que la description du système d'alimentation 13 est également adaptable à un système d'alimentation de la pile à combustible en gaz réducteur.

## Revendications

1. Système (13) d'alimentation d'une pile à combustible (12) en gaz oxydant ou réducteur, comprenant :
- une source de gaz (40),
- un dispositif (42) de séchage à régénération, propre à sécher un gaz passant au travers du dispositif de séchage (42) ou à être régénéré en humidifiant un gaz passant au travers du dispositif de séchage (42),
- une sortie (44) d'alimentation de la pile à combustible (12), et
- un circuit fluidique (48), le circuit fluidique (48) raccordant la source de gaz (40) au dispositif de séchage (42) pour le séchage du gaz fourni par la source de gaz (40) et l'obtention d'un gaz sec, le circuit fluidique (48) permettant la recirculation d'au moins une partie du gaz sec au travers du dispositif de séchage (42) pour la régénération du dispositif de séchage (42) et l'humidification du gaz sec recirculé,
le circuit fluidique (48) raccordant la sortie d'alimentation (44) au dispositif de séchage (42), pour l'alimentation de la sortie d'alimentation (44) avec du gaz humidifié obtenu par la recirculation du gaz sec au travers du dispositif de séchage (42) pour la régénération du dispositif de séchage (42),
**caractérisé en ce que** le circuit fluidique comprend une ligne (60) de contournement du dispositif de séchage (42), pour l'alimentation de la sortie d'alimentation (44) en gaz sec issu du dispositif de séchage (42) sans recirculation au travers du dispositif de séchage (42).

2. Système d'alimentation (13) selon la revendication 1, **caractérisé en ce qu'**il comprend en outre un réservoir (46), pour stocker du gaz sec séché par le dispositif de séchage (42) et **en ce que** le circuit fluidique (48) est adapté à alimenter le dispositif de séchage (42) avec au moins une partie du gaz sec stocké dans le réservoir (46), pour la régénération du dispositif de séchage (42).

3. Système d'alimentation (13) selon la revendication 2, **caractérisé en ce que** le circuit fluidique (48) comprend une ligne (50) d'alimentation du réservoir (46) en gaz sec issu du dispositif de séchage (42), et d'évacuation du gaz sec hors du réservoir (46) pour la régénération du dispositif de séchage (42).

4. Système d'alimentation (13) selon l'une quelconque des revendications précédentes, **caractérisé en ce qu'**il comprend des moyens (63) d'ajustement de la proportion de gaz sec recirculé au travers du dispositif de séchage (42) et de gaz sec non recirculé.

5. Système d'alimentation (13) selon l'une quelconque des revendications précédentes, **caractérisé en ce que** la source de gaz (40) est un électrolyseur.

6. Système d'alimentation (13) selon l'une quelconque des revendications précédentes, **caractérisé en ce que** le dispositif de séchage (42) est un dispositif à adsorption par variation de température et/ou par variation de pression.

7. Procédé d'alimentation d'une pile à combustible (12) en gaz oxydant ou réducteur, comprenant les étapes suivantes :
- fourniture d'un gaz ;
- séchage du gaz par passage dans un dispositif (42) de séchage de gaz à régénération, de façon à obtenir un gaz sec,
- humidification d'au moins une partie du gaz sec en régénérant le dispositif de séchage (42) par recirculation de la au moins une partie du gaz sec dans le dispositif de séchage (42), de manière à obtenir un gaz humidifié, et
- alimentation de la pile à combustible (12) avec du gaz séché dans le dispositif de séchage (42) puis humidifié par recirculation dans le dispositif de séchage (42),
**caractérisé en ce qu'**au moins une partie du gaz sec alimente directement la pile à combustible (12) sans être préalablement humidifié par recirculation dans le dispositif de séchage (42).

8. Procédé d'alimentation selon la revendication 7, **caractérisé en ce qu'**il comprend en outre une étape de stockage du gaz sec, préalable à l'étape d'humidification.

9. Procédé d'alimentation selon la revendication 7 ou 8, **caractérisé en ce que** le procédé comprend une étape supplémentaire d'ajustement de la proportion de gaz sec humidifié par recirculation dans le dispositif de séchage (42).

## Patentansprüche

1. System (13) zur Versorgung einer Brennstoffzelle (12) mit oxidierendem oder reduzierendem Gas, aufweisend:
- eine Gasquelle (40),
- eine Regenerativ-Trocknungsvorrichtung (42), welche ein Gas trocknen kann, welches durch die Trocknungsvorrichtung (42) durchströmt, oder welche durch Befeuchten eines Gases, welches durch die Trocknungsvorrichtung (42) durchströmt, regeneriert werden kann,
- einen Ausgang (44) zur Versorgung der Brennstoffzelle (12), und
- einen Fluidkreislauf (48), wobei der Fluidkreislauf (48) die Gasquelle (40) mit der Trocknungsvorrichtung (42) zum Trocknen des von der Gasquelle (40) zugeführten Gases und zum Erhalten eines trockenen Gases verbindet, wobei der Fluidkreislauf (48) die Rezirkulation von mindestens einem Teil des trockenen Gases durch die Trocknungsvorrichtung (42) zur Regeneration der Trocknungsvorrichtung (42) und zur Befeuchtung des rezirkulierten Gases ermöglicht,
wobei der Fluidkreislauf (48) den Ausgang zur Versorgung (44) mit der Trocknungsvorrichtung (42) zum Versorgen des Ausgangs zur Versorgung (44) mit befeuchtetem Gas verbindet, welches durch die Rezirkulation des trockenen Gases durch die Trocknungsvorrichtung (42) zur Regeneration der Trocknungsvorrichtung (42) erhalten wird,
**dadurch gekennzeichnet, dass** der Fluidkreislauf eine Leitung (60) zur Umgehung der Trocknungsvorrichtung (42) aufweist zur Versorgung des Ausgangs zur Versorgung (44) mit dem von der Trocknungsvorrichtung (42) stammenden trockenen Gas ohne Rezirkulation durch die Trocknungsvorrichtung (42).

2. System zur Versorgung (13) nach Anspruch 1, **dadurch gekennzeichnet, dass** es zusätzlich einen Behälter (46) zum Lagern des durch die Trocknungsvorrichtung (42) getrockneten trockenen Gases aufweist, und dass der Fluidkreislauf (48) zum Versorgen der Trocknungsvorrichtung (42) mit mindestens einem Teil des im Behälter (46) gelagerten trockenen Gases zur Regeneration der Trocknungsvorrichtung (42) angepasst ist.

3. System zur Versorgung (13) nach Anspruch 2, **dadurch gekennzeichnet, dass** der Fluidkreislauf (48) eine Leitung (50) zur Versorgung des Behälters (46) mit dem aus der Trocknungsvorrichtung (42) stammenden trockenen Gas und zur Abführung des trockenen Gases aus dem Behälter (46) zur Regeneration der Trocknungsvorrichtung (42) aufweist.

4. System zur Versorgung (13) nach einem der vorhergehenden Ansprüche, **dadurch gekennzeichnet, dass** es Mittel (63) zur Einstellung des Anteils vom trockenen Gas, welches durch die Trocknungsvoruchtung (42) rezirkuliert wird, und vom trockenen nicht-rezirkulierten Gas aufweist.

5. System zur Versorgung (13) nach einem der vorhergehenden Ansprüche, **dadurch gekennzeichnet, dass** die Gasquelle (40) ein Elektrolyseapparat ist.

6. System zur Versorgung (13) nach einem der vorhergehenden Ansprüche, **dadurch gekennzeichnet, dass** die Trocknungsvorrichtung (42) eine Vorrichtung zur Adsorption mittels Variation der Temperatur und/oder mittels Variation des Drucks ist.

7. Verfahren zur Versorgung einer Brennstoffzelle (12) mit oxidierendem oder reduzierendem Gas, welches die folgenden Schritte umfasst:
- Bereitstellen eines Gases;
- Trocknen des Gases durch Durchströmung durch eine Regenerativ-Trocknungsvorrichtung (42) für Gas, um ein trockenes Gas zu erhalten,
- Befeuchten mindestens eines Teils des trockenen Gases unter Regeneration der Trocknungsvorrichtung (42) durch Rezirkulation des mindestens einen Teils des trockenen Gases in die Trocknungsvorrichtung (42), um ein befeuchtetes Gas zu erhalten, und
- Versorgen der Brennstoffzelle (12) mit Gas, welches durch die Trocknungsvorrichtung (42) getrocknet wurde und dann durch Rezirkulation durch die Trocknungsvorrichtung (42) befeuchtet wurde,
**dadurch gekennzeichnet, dass** mindestens ein Teil des trockenen Gases unmittelbar die Brennstoffzelle (12) versorgt, ohne vorher durch Rezirkulation in der Trocknungsvorrichtung (42) befeuchtet zu werden.

8. Verfahren zur Versorgung nach Anspruch 7, **dadurch gekennzeichnet, dass** es zusätzlich vor dem Befeuchtungsschritt einen Schritt zur Lagerung des trockenen Gases umfasst.

9. Verfahren zur Versorgung nach Anspruch 7 oder Anspruch 8, **dadurch gekennzeichnet, dass** das Verfahren einen zusätzlichen Schritt zur Einstellung des Anteils von trockenem Gase umfasst, welches durch die Rezirkulation durch die Trocknungsvorrichtung (42) befeuchtet wird.

## Claims

1. System (13) for supplying a fuel cell (12) with oxidising or reducing gas, comprising
- a gas source (40),
- a regenerative drying device (42), adapted to dry a gas passing through the drying device (42) or to be regenerated by humidifying a gas passing through the drying device (42),
- an outlet (44) for supplying the fuel cell (12), and
- a fluid circuit (48), the fluid circuit (48) connecting the gas source (40) to the drying device (42) for drying the gas provided by the gas source (40) and obtaining a dry gas, the fluid circuit (48) allowing recirculation of at least a portion of the dry gas through the drying device (42) for regenerating the drying device (42) and humidifying the recirculated dry gas,
the fluid circuit (48) connecting the supplying outlet (44) to the drying device (42), for supplying the supplying outlet (44) with humidified gas obtained by recirculation of the dry gas through the drying device (42) for regeneration of the drying device (42),
**characterised in that** the fluid circuit comprises a line (60) for by-passing the drying device (42), for supplying the supplying outlet (44) with dry gas coming from the drying device (42) without recirculation through the drying device (42).

2. Supply system (13) according to claim 1, **characterised in that** it further comprises a reservoir (46) for storing dry gas dried by the drying device (42); and **in that** the fluid circuit (48) is arranged to supply the drying device (42) with at least a portion of the dry gas stored in the reservoir (46) for regeneration of the drying device (42).

3. Supply system (13) according to claim 2, **characterised in that** the fluid circuit (48) comprises a line (50) for supplying the reservoir (46) with dry gas coming from the drying device (42) and for evacuating dry gas from the reservoir (46) for regeneration of the drying device (42).

4. Supply system (13) according to any one of the preceding claims, **characterised in that** it comprises means (63) for adjusting the proportion of dry gas recirculated through the drying device (42) and of non-recirculated dry gas.

5. Supply system (13) according to any one of the preceding claims, **characterised in that** the gas source (40) is an electrolyser.

6. Supply system (13) according to any one of the preceding claims, **characterised in that** the drying device (42) is a temperature swing and/or pressure swing adsorption device.

7. Method of supplying a fuel cell (13) with oxidising or reducing gas, comprising the following steps:
- supplying a gas,
- drying the gas by passing it through a regenerative gas-drying device (42) so as to obtain a dry gas;
- humidifying at least a portion of the dry gas while regenerating the drying device (42) by recirculating at least a portion of the dry gas into the drying device (42) so as to obtain a humidified gas, and
- supplying the fuel cell (12) with gas that has been dried in the drying device (42) and then humidified by recirculation into the drying device (42),
**characterised in that** at least a portion of the dry gas supplies the fuel cell (12) directly without having been previously humidified by recirculation into the drying device (42).

8. Supply method according to claim 7, **characterised in that** it further comprises a step of storing the dry gas prior to the humidifying step.

9. Supply method according to claim 7 or 8, **characterised in that** the method comprises an additional step of adjusting the proportion of dry gas humidified by recirculation into the drying device (42).
